# EUROPÄISCHE PATENTANMELDUNG

(11) **EP 4 704 246 A1**
(43) Veröffentlichungstag der Anmeldung: **04.03.2026**
(21) Anmeldenummer: 25195050.7
(22) Anmeldetag: 11.08.2025
(51) Int. Cl.: H01M 50/50, B21D 22/06

(54) **WERKZEUG ZUM UMFORMEN EINES VORFORMLINGS ZU EINEM STROMSCHIENEN-ROHLING UND UMFORMVORRICHTUNG MIT EINEM DERARTIGEN WERKZEUG**

(30) Priorität: 03.09.2024 DE 102024208341
(71) Anmelder: VOLKSWAGEN AG, 38440 Wolfsburg (DE)
(72) Erfinder: Rüsch, Sönke, 38440 Wolfsburg (DE); Koch, Jonas, 38440 Wolfsburg (DE)

(57) **Zusammenfassung**

Die Erfindung bezieht sich auf ein Werkzeug (20) zum Umformen eines Vorformlings (30) zu einem Stromschienen-Rohling mit einem elastisch flexiblen Biegeabschnitt (12, 12'), umfassend
- ein Untergesenk (21) mit einer Vorformling-Aufnahme, die eine Auflagefläche (212) mit einer lokalen Senke (213) aufweist, und
- ein Obergesenk (22), das senkrecht auf das Untergesenk (21) zustellbar ist und eine Pressfläche (222) mit einem räumlich mit der Senke (213) korrespondierenden Vorsprung aufweist,

Die Erfindung zeichnet sich dadurch aus, dass das Obergesenk (22) mehrteilig ausgebildet ist, wobei der Vorsprung als ein in Zustellrichtung relativ zu einem Obergesenk-Hauptkörper (221) verfahrbarer und über die Pressfläche (222) hinaus auf das Untergesenk (21) hin zustellbarer Stößel (223) ausgebildet ist.

## Beschreibung

Die Erfindung bezieht sich auf ein Werkzeug zum Umformen eines Vorformlings zu einem Stromschienen-Rohling mit einem elastisch flexiblen Biegeabschnitt, umfassend
- ein Untergesenk mit einer Vorformling-Aufnahme, die eine Auflagefläche mit einer lokalen Senke aufweist, und
- ein Obergesenk, das senkrecht auf das Untergesenk zustellbar ist und eine Pressfläche mit einem räumlich mit der Senke korrespondierenden Vorsprung aufweist.

Die Erfindung bezieht sich weiter auf eine Umformvorrichtung, umfassend
- ein derartiges Werkzeug,
- eine Presse mit einem Pressenstempel, der im Rahmen eines Pressenhubs von einer Entlastungsstellung in eine Pressstellung und zurück verfahrbar ist, und
- einen Koppelmechanismus mittels dessen das Obergesenk des Werkzeugs mit dem Pressenstempel derart mechanisch gekoppelt ist, dass das Obergesenk in der Entlastungsstellung senkrecht vom Untergesenk beabstandet und in der Pressstellung maximal auf das Untersenk zugestellt ist.

### Stand der Technik

Ein gattungsgemäßes Werkzeug und - implizit - eine gattungsgemäße Umformvorrichtung sind bekannt aus der JP 2012-182043 A.

Beim Betrieb leistungsstarker elektrischer Traktionsmaschinen für Kraftfahrzeuge fließen hohe Ströme. Diese werden typischerweise über sogenannte Stromschienen transportiert, beispielweise zwischen einer elektrischen Batterie und einer Leistungselektronik und/oder zwischen der Leistungselektronik und einem Stator der elektrischen Traktionsmaschine. Unter einer Stromschiene versteht man im Allgemeinen ein im Wesentlichen steifes, gestängeartiges Gebilde aus elektrisch gut leitfähigem Material, beispielweise Kupfer, dessen dreidimensionale Erstreckung im Raum in Anpassung an die Erfordernisse des Einzelfalls gestaltet ist. Typischerweise haben derartige Stromschienen ein flaches Profil, was im Hinblick auf eine bessere Abgabe von durch den Stromfluss erzeugter thermischer Energie als günstiger gegenüber runden Profilen angesehen wird.

Aus der WO 2008/098193 A1 ist es bekannt, derartige Stromschienen durch Biegeprozesse aus geraden Flachleitern zu erzeugen. Durch spezielle Formelemente, wie etwa V-, S-, M-förmige oder ähnliche Formbereiche lassen sich trotz der grundsätzlichen Steifheit des Materials elastisch flexible Abschnitte definieren, die beispielsweise bei der Montage temporär genutzt werden können, um einen gegebenen Bauraum besser auszunutzen, oder die dauerhaft genutzt werden, um eine federelastische Anpresskraft an z.B. austauschbare Kontaktelemente zu ermöglichen. Letzteres ist in der vorgenannten Druckschrift ausführlich beschrieben, ersteres wird in der JP 2012-182043 A diskutiert.

Aus der DE 20 2009 009 607 U1 und der DE 10 2022 105 700 A1 ist es zudem bekannt, Stromschienen mit unterschiedlich profilierten Bereichen einzusetzen, wobei als Herstellungsverfahren Stanzen, Druckgießen sowie Schneiden mit nachfolgendem Umformen genannt werden.

Aus der eingangs genannten, gattungsbildenden JP 2012-182043 A ist es bekannt, einen Vorformling für eine Stromschiene bzw. einen Rohling dafür aus einer Vielzahl gestapelter, dünner Blechstreifen aufzubauen und im Untergesenk eines Werkzeugs einer Umformvorrichtung, insbesondere einer Presse, zu positionieren. Die ebenen Blechstreifen werden dabei auf einer ebenfalls ebenen Auflagefläche gestapelt. Die Auflagefläche ist jedoch lokal von einer Senke unterbrochen, die von dem in das Untergesenk eingelegten Blechstreifenstapel überspannt wird. Im nachfolgenden Umformprozess wird ein Obergesenk, das einen mit der Senke in der Auflagefläche des Untergesenks korrespondierenden Vorsprung aufweist, senkrecht auf das Untergesenk zugestellt. Dabei werden die Blechstreifen aufeinander gepresst und im Bereich der Senke bzw. des Vorsprung zu einer lokalen Welle oder Schleife verformt. In einem nachfolgenden Arbeitsschritt werden die Endbereiche des derart verformten Blechstreifenstapels durch Verschweißung der einzelnen Blechstreifen miteinander zu massiven Kontaktbereichen gefügt. Die durch die beschriebene Umformung erzeugte Welle stellt einen sogenannten Flexbereich dar, an dem die endständigen Kontaktabschnitte relativ zueinander federelastisch verschwenkbar sind.

Nachteilig bei dem bekannten Verfahren ist insbesondere die Notwendigkeit der Bereitstellung eines Vorformlings aus einem Flachmaterial. Gerade das für die Fertigung von Stromschienen bevorzugte Kupfer wird nämlich klassischerweise in Form von Runddrähten auf sogenannten Coils geliefert. Der bekannte Ansatz - übertragen auf ein Vollmaterial anstatt eines Blechstreifenstapels - würde also einen gesonderten Vorbereitungsschritt der Umformung des rundprofilierten Drahtes in ein Flachmaterial erfordern. Solch zusätzliche Arbeitsschritte sind zeitaufwendig und teuer.

Es ist die Aufgabe der vorliegenden Erfindung, ein gattungsgemäßes Werkzeug und eine gattungsgemäße Umformvorrichtung derart weiterzubilden, dass wenigstens ein Arbeitsschritt eingespart werden kann.

Diese Aufgabe wird im Hinblick auf ein Werkzeug mit den Merkmalen des Oberbegriffs von Anspruch 1 dadurch gelöst, dass das Obergesenk mehrteilig ausgebildet ist, wobei der Vorsprung als ein in Zustellrichtung relativ zu einem Obergesenk-Hauptkörper verfahrbarer und über die Pressfläche hinaus auf das Untergesenk hin zustellbarer Stößel ausgebildet ist.

Bevorzugte Ausführungsformen der Erfindung sind Gegenstand der abhängigen Patentansprüche.

Der Kerngedanke der vorliegenden Erfindung ist es, ein Werkzeug zur Verfügung zu stellen, mit dem die traditionellen Verfahrensschritte eines Gesenkschmiedens und eines Streckziehens bzw. Quetschens kombiniert werden können, sodass beide Verfahrensschritte zeitlich nacheinander oder einander zeitlich bereichsweise überlappend in einem einzigen Pressenhub der Presse einer entsprechenden Umformvorrichtung ausgeführt werden können. Eine entsprechende Umformvorrichtung mit den Merkmalen des Oberbegriffs von Anspruch 3 zeichnet sich also erfindungsgemäß dadurch aus, dass der Koppelmechanismus derart ausgelegt ist, dass während einer ersten Phase des Pressenhubs der Obergesenk-Hauptkörper und der Stößel gemeinsam und während einer zweiten Phase des Pressenhubs nur der Stößel auf das Untergesenk zugestellt wird.

Dort, wo der Vorformling zwischen der Pressfläche des Obergesenks und der Auflagefläche des Untergesenks gepresst wird, fließt das Material des Vorformlings in die von der Gravur der Gesenke, insbesondere des Untergesenks, zur Verfügung gestellten Räume. Dadurch kann beispielsweise eine Umformung des Profils, z.B. von rund zu flach, vorgenommen werden. Ebenso können leichte Biegungen dort realisiert werden, wo ein starrer Vorsprung des Ober- oder des Untergesenks mit einer korrespondierenden Senke im Unter- bzw. Obergesenk korrespondiert. Diese Art der Umformung entspricht dem herkömmlichen Gesenkschmieden. Der entsprechend umgeformte Vorformling ist zum Abschluss dieser Bearbeitungsphase fest zwischen Ober- und Untergesenk geklemmt. Ein dann folgender (weiterer) Vorschub des Stößels treibt das Material in seinem Kontaktbereich in die korrespondierende Senke des Untergesenks, sodass eine entsprechende Welle ausgebildet wird. Dies entspricht dem traditionellen Streckziehen oder, bei weniger präziser Auslegung, dem traditionellen Quetschen. Je nach spezieller Kopplung des Werkzeugs mit dem Pressenstempel der übergeordneten Umformvorrichtung lassen sich die beiden beschriebenen Phasen zeitlich streng getrennt oder bereichsweise überlappend realisieren.

Beispielweise kann vorgesehen sein, dass der Obergesenk-Hauptkörper über wenigstens eine zugeordnete Hauptkörper-Druckfeder mit dem Pressenstempel gekoppelt ist. Die Federkonstante der Hauptkörper-Druckfeder ist dabei so auszulegen, dass eine für die gewünschte (Gesenkschmiede-)Umformung erforderliche Presskraft auf den Vorformling übertragen werden kann, ohne dass die Druckfeder vollständig einfedert. Nachdem das bei der Umformung fließende Material des Vorformlings sämtliche ihm zur Verfügung stehenden Räume ausgefüllt hat, ist kein weiterer Vorschub des Obergesenk-Hauptkörpers mehr möglich; gleichwohl ermöglicht die Druckfeder-Kopplung einen weiteren Vortrieb des Pressenstempels. Ist dieser unmittelbar, d.h. ohne zwischengeschaltete Druckfeder, mit dem Stößel gekoppelt, führt besagter weiterer Vorschub des Pressenstempels zu einem separaten Vorschub des Stößels relativ zum Obergesenk-Hauptkörper und zum Vorformling, was der oben erläuterten Streckzeih- bzw. Quetsch-Phase entspricht.

Denkbar ist es, auch den Stößel über eine ihm zugeordnete Stößel-Druckfeder mit dem Pressenstempel zu koppeln. Wenn die Federkonstante der Stößel-Druckfeder von der Federkonstanten der Hauptkörper-Druckfeder verschieden ist, die Hauptkörper-Druckfeder insbesondere weicher ist als die Stößel-Druckfeder, wie dies bevorzugt vorgesehen ist, lässt sich eine ähnliche Phasenabfolge, wie oben beschrieben, realisieren. Durch Abstimmung der Federkonstanten lässt sich die konkrete, ggf. zeitlich überlappende Phasenabfolge sehr differenziert einstellen.

Alternativ oder zusätzlich zu der geschilderten Ausführungsform mit im Wesentlichen zeitversetztem Vortrieb von Obergesenk-Hauptkörper und Stößel ist es denkbar, den Koppelmechanismus derart auszulegen, dass während eines Pressenhubs der Stößel mit einer größeren Zustellgeschwindigkeit als der Obergesenk-Hauptkörper auf das Untergesenk zugestellt wird. Beispielsweise können solch unterschiedliche Vortriebsgeschwindigkeiten durch eine Getriebe-Kopplung zwischen den Bestandteilen des Obergesenks und dem Pressenstempel realisiert werden. Eine solche Getriebekopplung ist zwar technisch aufwendiger als die zuvor beschriebene Druckfeder-Kopplung; mit ihr lassen sich jedoch deutlich differenziertere Phasenabfolgen realisieren.

Die differenziertesten Phasenabfolgen lassen sich mit einem mehrteiligen Pressenstempel erzielen, dessen einzelne Teile von unabhängigen Antrieben, insbesondere Hydraulikantrieben, angetrieben werden. Dieser Ansatz ist allerdings technisch sehr aufwendig.

In jedem Fall erlaubt es die vorliegende Erfindung, in einem Pressenhub eine ggf. nur bereichsweise Profilumformung eines Vorformlings und zugleich eine Ausbildung von streckgezogenen bzw. gequetschten Formelementen, mittels welcher elastisch flexible Bereiche der letztendlich zu erzeugenden Stromschiene definiert werden können, zu erzeugen. Das bevorzugte Ausgangsmaterial für den Vorformling ist metallischer Runddraht, der geeignet abgelängt wird, beispielsweise von einem Kupfer-Coil.

Das resultierende Produkt der oben beschriebenen Umformung mittels erfindungsgemäßer Umformvorrichtung wird hier als Stromschienen-Rohling angesprochen, um zum Ausdruck zu bringen, dass, je nach den Erfordernissen des Einzelfalls, weitere Bearbeitungsschritte möglich sind. Der Fachmann wird jedoch verstehen, dass derartige zusätzliche Arbeitsschritte nicht zwingend erforderlich sind, wenn der resultierte Stromschienen-Rohling selbst unmittelbar als Stromschiene einsetzbar ist.

Weitere Merkmale und Vorteile der Erfindung ergeben sich aus der nachfolgenden, speziellen Beschreibung und den Zeichnungen.

Es zeigen:
- Figur 1: eine perspektivische Darstellung einer Ausführungsform einer Stromschiene, welche mittels einer erfindungsgemäßen Umformvorrichtung herstellbar ist,
- Figur 2: zwei verschiedene Ausführungsformen des Flexbereichs einer derartigen Stromschiene sowie
- Figur 3: drei Teilschritte eines Verfahrens zum Betrieb eines erfindungsgemäßen Werkzeugs.

Gleiche Bezugszeichen in den Figuren weisen auf gleiche oder analoge Elemente hin.

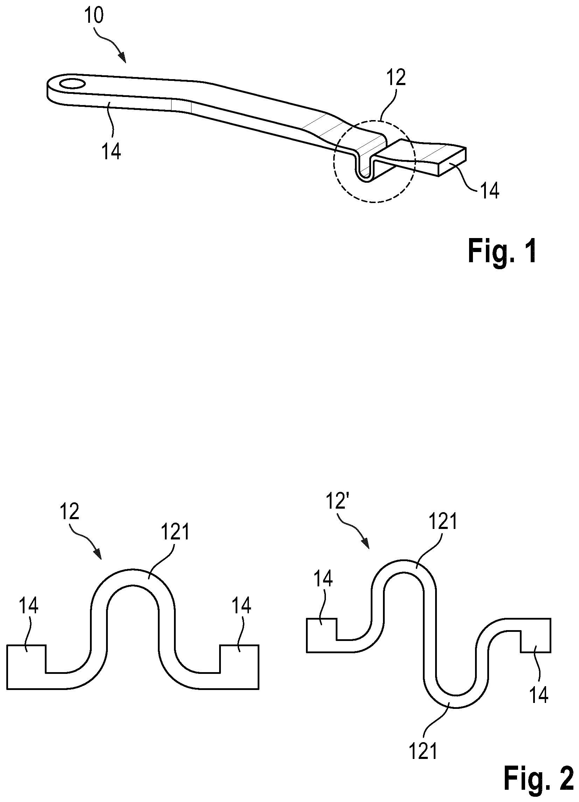

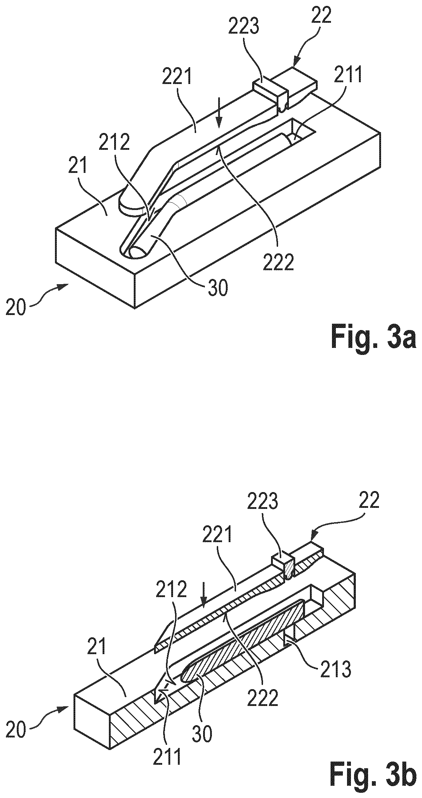

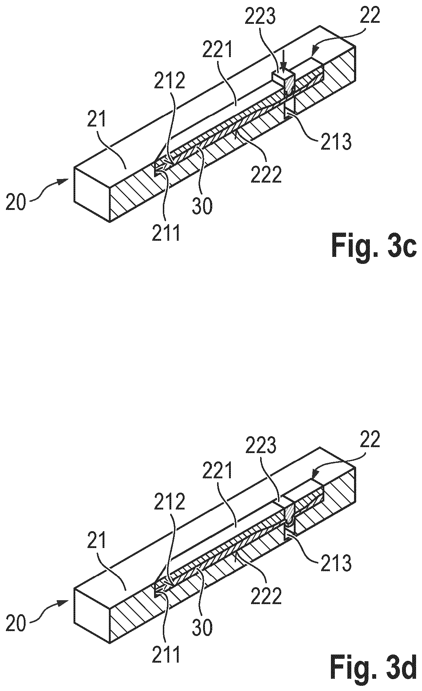

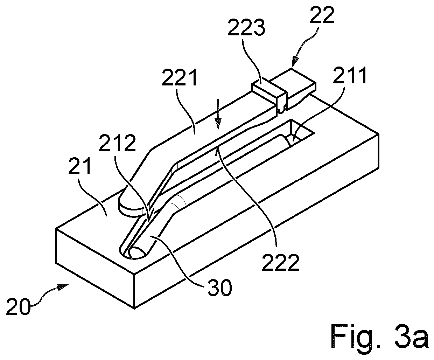

Figur 1 zeigt in perspektivischer Darstellung eine bevorzugte Ausführungsform einer Stromschiene 10, wie sie unter Verwendung einer erfindungsgemäßen Umformvorrichtung bzw. eines erfindungsgemäßen Werkzeugs 20 (vgl. Figur 3) herstellbar ist. Von besonderer Bedeutung ist der durch eine gestrichelte Einkreisung hervorgehobene Flexbereich 12 der Stromschiene 10, der eine elastisch flexible Verbindung der beidseitig benachbart angeordneten, steifen Schienenbereiche 14 darstellt. Figur 2 zeigt zwei unterschiedliche Ausführungsformen des Flexbereichs 12 bzw. 12', wie sie während einer Streckzieh-Phase beim Betrieb eines erfindungsgemäßen Werkzeugs 20 erzeugbar sind. Wie in Figur 2 erkennbar, zeichnet sich eine durch das Streckziehen erzeugte Umformung zum einen durch die Ausbildung wenigstens einer Schleife 121 als auch durch eine Materialverjüngung im Bereich der Schleife 121 im Vergleich zu den benachbarten, steifen Schienenbereichen 14 aus.

Figur 3 zeigt die Funktionsweise eines erfindungsgemäßen Werkzeugs 20 im Kontext einer nicht näher dargestellten, insbesondere zusätzlich eine Presse umfassenden Umformvorrichtung. Teilfigur 3a zeigt dabei einen ersten Verfahrensschritt in schematisierter, perspektivischer Darstellung. Die Teilfiguren 3b bis 3d zeigen denselben und weitere Verfahrensschritte in Teilschnittdarstellung.

Das erfindungsgemäße Werkzeug 20 umfasst ein Untergesenk 21 mit einer Gravur 211. Die Gravur 211 ist einerseits geeignet, einen ggf. vorgebogenen Drahtabschnitt mit rundem Profil als Vorformling 30 aufzunehmen. Die Gravur 211 ist gegenüber dem Vorformling 30 übermaßig und definiert denjenigen Raum der dem beim nachfolgenden Pressvorgang fließenden Material des Vorformlings 30 zu seiner Ausdehnung zur Verfügung steht. Dies entspricht in etwa der Negativform der Formvorgabe für die herzustellende Stromschiene 10. Das trifft zumindest für die steifen Bereiche 14 zu. Der entsprechender Gravurbereich ist nach unten durch eine Auflagefläche 212 beschränkt, auf welcher der Vorformling 30 aufliegt. In demjenigen Bereich des Vorformlings 30, in dem der Flexbereich 12 entstehen soll, ist die Auflagefläche 212 durch eine Senke 213 unterbrochen, die insbesondere in den Teilfiguren 3b bis d erkennbar ist. Diese Senke 213 wird von dem in die Gravur 211 eingelegten Vorformling 30 überspannt.

Weiter umfasst das erfindungsgemäße Werkzeug 20 ein Obergesenk 22. Dieses ist senkrecht auf das Untergesenk 21 zustellbar und zumindest bereichsweise passig in dessen Gravur 211 einführbar. Das Obergesenk 22 ist mit dem Stempel einer nicht dargestellten Presse gekoppelt, mittels welcher die zum Zustellen erforderliche Presskraft aufbringbar ist. Das Obergesenk 22 bewirkt daher mit seiner dem Vorformling zugewandten Pressfläche 222 zum einen die Übertragung der Presskraft auf den Vorformling 30 und begrenzt zugleich den für dessen Materialfließen zur Verfügung stehenden Raum. Es definiert daher im Wesentlichen die obere Oberfläche der herzustellenden Stromschiene 10. Das trifft zumindest für die steifen Bereiche 14 zu. In demjenigen Bereich des Vorformlings 30, der die Senke 213 überspannt und in dem der Flexbereich 12 erzeugt werden soll, ist der Hauptkörper 221 des Obergesenks 22 unterbrochen. Die Seitenwände dieser Unterbrechung bilden eine Linearführung für einen Stößel 223, der an die Senke 213 formangepasst ist.

In einem ersten Verfahrensschritt, wie er in den Teilfiguren 3a und 3b dargestellt ist, wird das gesamte Obergesenk 22, d.h. Hauptkörper 221 und Stößel 223, gemeinsam auf das Untergesenk zugestellt und bewirken eine gemeinsame Presskraft auf den Vorformling 30. Dieser weicht durch Materialfließen aus, was einer Umformung nach dem Prinzip des Gesenkschmiedens entspricht. Das Materialfließen erfolgt im Wesentlichen in lateraler Richtung.

Wie weiter in den Teilfiguren 3c und d dargestellt, wird in einer anschließenden Streckzieh-Phase der Stößel 223 separat weiter zugestellt, d.h. (auch) relativ zum Hauptkörper 221 verschoben. Der solchermaßen lokal aufgebrachten, weiteren Presskraft weicht das Material des Vorformlings 30 durch Fließen in die Senke 213 aus. Dabei kommt es gemäß der Formvorgabe des Stößels zum einen zu der oben bereits erläuterten Bildung einer Schleife 121 und andererseits zur ebenfalls bereits beschriebenen Materialverjüngung.

Das Ergebnis eines solchen Prozesses ist ein Stromschienen-Rohling, der entweder weiter bearbeitet oder unmittelbar als Stromschiene 10 verwendet werden kann.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere wird der Fachmann verstehen, dass die Begriffe Untergesenk 21 und Obergesenk 22 keine Beschränkung hinsichtlich der Anordnung des erfindungsgemäßen Werkzeugs 20 innerhalb einer Umformvorrichtung implizieren sollen. Typischerweise wird zwar das Obergesenk 22 relativ zur Schwerkraftrichtung oberhalb des Untergesenks 21 angeordnet sein; umgekehrte Anordnungen oder Anordnung der Gesenke 21, 22 in horizontaler Nachbarschaft, beispielsweise in Horizontalpressen, sind ebenso denkbar. Der Fachmann wird auch verstehen, dass sich das Untergesenk 21 nicht durch die Anordnung der Gravur 211 als solches definiert. Vielmehr kann alternativ oder zusätzlich im Obergesenk 22 eine Gravur vorgesehen sein. Auch ist es ohne weiteres möglich, im Obergesenk 22 mehrere Stößel 223 vorzusehen, um mehrere Flexbereiche zu schaffen. Und um Strukturen wie in Figur 2 rechts dargestellt zu schaffen, kann ohne weiteres auch im Untergesenk ein zusätzlicher Stößel 223 vorgesehen sein.

### Bezugszeichenliste

- 10: Stromschiene
- 12: Flexbereich / Biegeabschnitt von 10
- 12': alternativer Flexbereich von 10
- 121: Schleife
- 14: steifer Bereich von 10
- 20: Werkzeug
- 21: Untergesenk
- 211: Gravur
- 212: Auflagefläche
- 213: Senke
- 22: Obergesenk
- 221: Hauptkörper von 22
- 222: Pressfläche
- 223: Stößel
- 30: Vorformling

## Patentansprüche

1. Werkzeug (20) zum Umformen eines Vorformlings (30) zu einem Stromschienen-Rohling mit einem elastisch flexiblen Biegeabschnitt (12, 12'), umfassend
- ein Untergesenk (21) mit einer Vorformling-Aufnahme, die eine Auflagefläche (212) mit einer lokalen Senke (213) aufweist, und
- ein Obergesenk (22), das senkrecht auf das Untergesenk (21) zustellbar ist und eine Pressfläche (222) mit einem räumlich mit der Senke (213) korrespondierenden Vorsprung aufweist,
**dadurch gekennzeichnet,**
**dass** das Obergesenk (22) mehrteilig ausgebildet ist, wobei der Vorsprung als ein in Zustellrichtung relativ zu einem Obergesenk-Hauptkörper (221) verfahrbarer und über die Pressfläche (222) hinaus auf das Untergesenk (21) hin zustellbarer Stößel (223) ausgebildet ist.

2. Werkzeug (20) nach Anspruch 1,
**dadurch gekennzeichnet,**
**dass** der Stößel (223) in einer Linearführung im Obergesenk-Hauptkörper (221) linear beweglich gelagert ist.

3. Umformvorrichtung, umfassend
- ein Werkzeug (20) nach einem der vorangehenden Ansprüche,
- eine Presse mit einem Pressenstempel, der im Rahmen eines Pressenhubs von einer Entlastungsstellung in eine Pressstellung und zurück verfahrbar ist, und
- einen Koppelmechanismus mittels dessen das Obergesenk (22) des Werkzeugs (20) mit dem Pressenstempel derart mechanisch gekoppelt ist, dass das Obergesenk (22) in der Entlastungsstellung senkrecht vom Untergesenk (21) beabstandet und in der Pressstellung maximal auf das Untersenk zugestellt ist,
**dadurch gekennzeichnet,**
**dass** der Koppelmechanismus derart ausgelegt ist, dass während einer ersten Phase des Pressenhubs der Obergesenk-Hauptkörper (221) und der Stößel (223) gemeinsam und während einer zweiten Phase des Pressenhubs nur der Stößel (223) auf das Untergesenk (21) zugestellt wird.

4. Umformvorrichtung nach Anspruch 3,
**dadurch gekennzeichnet,**
**dass** der Koppelmechanismus derart ausgelegt ist, dass während eines Pressenhubs der Stößel (223) mit einer größeren Zustellgeschwindigkeit als der Obergesenk-Hauptkörper (221) auf das Untergesenk (21) zugestellt wird.

5. Umformvorrichtung nach einem der Ansprüche 3 bis 4,
**dadurch gekennzeichnet,**
**dass** der Obergesenk-Hauptkörper (221) über wenigstens eine zugeordnete Hauptkörper-Druckfeder mit dem Pressenstempel gekoppelt ist.

6. Umformvorrichtung nach Anspruch 5,
**dadurch gekennzeichnet,**
**dass** zusätzlich der Stößel (223) über wenigstens eine zugeordnete Stößel-Druckfeder mit dem Pressenstempel gekoppelt ist.

7. Umformvorrichtung nach Anspruch 6,
**dadurch gekennzeichnet,**
**dass** die Stößel-Druckfeder und die Hauptkörper-Druckfeder unterschiedliche Federkonstanten aufweisen.

8. Umformvorrichtung nach Anspruch 7,
**dadurch gekennzeichnet,**
**dass** die Stößel-Druckfeder härter ist als die Hauptkörper-Druckfeder.

9. Umformvorrichtung, umfassend
- ein Werkzeug (20) nach einem der vorangehenden Ansprüche,
- eine Presse mit einem Pressenstempel, der im Rahmen eines Pressenhubs von einer Entlastungsstellung in eine Pressstellung und zurück verfahrbar ist, und
- einen Koppelmechanismus mittels dessen das Obergesenk (22) des Werkzeugs (20) mit dem Pressenstempel derart mechanisch gekoppelt ist, dass das Obergesenk (22) in der Entlastungsstellung senkrecht vom Untergesenk (21) beabstandet und in der Pressstellung maximal auf das Untersenk zugestellt ist,
**dadurch gekennzeichnet, dass** der Koppelmechanismus derart ausgelegt ist, dass während eines Pressenhubs der Stößel (223) mit einer größeren Zustellgeschwindigkeit als der Obergesenk-Hauptkörper (221) auf das Untergesenk (21) zugestellt wird.
